# EUROPEAN PATENT SPECIFICATION

(11) **EP 4 448 310 B1**
(45) Date of publication and mention of the grant of the patent: **15.04.2026**
(21) Application number: 22835893.3
(22) Date of filing: 15.12.2022
(51) Int. Cl.: B60G 15/06, B60G 99/00, B62D 33/06

(54) **VEHICLE COMPRISING A SUSPENSION SYSTEM**
FAHRZEUG MIT EINEM AUFHÄNGUNGSSYSTEM
VÉHICULE COMPRENANT UN SYSTÈME DE SUSPENSION

(30) Priority: 17.12.2021 IT 202100031646
(43) Date of publication of application: 23.10.2024
(73) Proprietor: Università degli studi di Bergamo, 24129 Bergamo (IT); Monticelli, Luca, 42049 Sant'Ilario d'Enza (Reggio Emilia) (IT)
(72) Inventor: BARAGETTI, Sergio, 24030 ALMENNO SAN BARTOLOMEO (BERGAMO) (IT); ARCIERI, Emanuele Vincenzo, 24121 BERGAMO (IT); MONTICELLI, Luca, 42049 SANT'ILARIO D'ENZA (REGGIO EMILIA) (IT)
(74) Representative: Bacchini, Davide
(86) International application number: PCT/IB2022/062295
(87) International publication number: WO 2023/111937

(56) References cited:
- CN-A- 101 941 468
- DE-A1- 102011 004 382
- DE-A1- 2 719 925
- DE-A1- 3 605 441
- DE-B- 1 290 830
- JP-U- S53 144 608

## Description

### Technical field

The present invention relates to a vehicle comprising a suspension system.

### Prior art

In the design of a vehicle, the comfort of the users (drivers or passengers) is of particular importance. Therefore, there is a continuous search for solutions which allow to increase comfort by reducing shocks and/or vibrations to which the users are subjected during travel in the vehicle.

In particular, such solutions are developed ad hoc depending on the vehicle and the use for which they are intended. This is closely related to the needs of the application, for example quantity and level of impacts or vibrations in play, weight and position of the structure.

For example, it is particularly important to increase the travel comfort for those inside an ambulance. In particular, the primary objective is to reduce the transfer of loads to the patient as much as possible. In fact, due to the emergency situation, the transport is characterized by abrupt braking, accelerations and sudden changes of direction.

Document CN109124903 A shows a system for reducing the vibrations transmitted to the occupants of an ambulance. In the lower part of the cabin there are four brackets, positioned respectively in the four vertices. A rod is then fixed to each bracket. The other end of the rod is instead fixed to an element kept pressurised. Therefore, there are two rods for each side of the cabin, arranged crosswise. The pressurised element is mounted on a slide on which it can freely slide. Cylinders are also present which are capable of exerting a pressure such as to support the weight of the cabin, as well as the weight of the equipment and the people present inside the cabin. The cylinders are fixed to the lower surface of the vehicle. When the vehicle is in motion, any vertical movements of the cabin due to the presence of bumps of the road surface are damped thanks to the connection system formed by the rods and the pressure provided by means of the cylinders.

A first drawback of such a solution is the structural complexity. This involves above all the need for frequent maintenance, to prevent the wear of the components from compromising the comfort of the occupants.

A second drawback lies in the fact that the solution is aimed at damping the vibrations for the entire vehicle. Therefore, the solution is not capable of satisfying the demand for greater comfort for the sanitary compartment (as it houses a patient).

Document KR100855613 B1 aims to reduce the shock suffered by the patient lying on the stretcher during loading and unloading from the vehicle. The system allows lowering the rear part of the vehicle in the steps of loading and unloading the stretcher. In particular, the system consists of a leaf spring connected to the lower part of the vehicle frame and an air spring positioned vertically between the frame and the leaf spring. Sensors are also present for detecting the height from the ground and a series of control elements managed by an electronic control unit.

Therefore, such a solution concentrates on increasing patient comfort in the steps of getting into/out of the vehicle, not during transport.

Document DE3605441 A1 shows a cab suspension in lorries in which swing metal elements known per se are arranged obliquely as combined pressure/shear mounts between the cab and frame in the longitudinal direction and/or transverse direction of the vehicle and the point of intersection of the bearing action lines is located in the region of the centre of gravity of the cab.

Document CN101941468 A discloses a cab suspension device, which comprises a frame, a cab, a damper and a spring. The cab suspension device is characterized by comprising a motor and a screw structure which consists of a screw and a nut arranged symmetrically.

Document DE1290830 B refers to the fastening of a drive cab of trucks to the vehicle frame, which has two longitudinal supports, by means of four bearing points, two of which are opposite to each other in the transverse direction of travel and have the advantage of good vertical suspension and at least the properties of a limited steering bearing.

Document DE102011004382 A1 shows a vehicle according to the preamble of claim 1 and describes a vehicle with a frame and a vehicle body moving relative to the frame, where the vehicle body has a passenger cabin and the vehicle body is connected with the frame over adjustable elastic coupling elements. An evaluation and control unit continuously determines the current weight of the vehicle body. The evaluation and control unit adjusts the coupling element depending on the current determined weight of the vehicle body.

Document JP S53 144608 U discloses a cabin of an extraction shovel, wherein a cabin is provided on a frame mounted on a chassis of the hydraulic shovel via a vibration isolator.

Document DE 27 19 925 shows a resilient support comprising a shock-absorbing block with a cavity therein, wherein the suspensions are arranged inclined towards a common vertex.

### Disclosure of the invention

In this context, the technical task underpinning the present invention is that of proposing a suspension system and a vehicle comprising such a suspension system, which obviate the drawbacks of the prior art cited above.

In particular, the object of the present invention is to propose a suspension system which can be used on several types of vehicles.

Another object of the present invention is to provide a suspension system, which is an alternative to the already existing systems.

A further object of the present invention is to propose a vehicle which ensures high comfort to its users.

The stated technical task and the specified objects are substantially achieved by a suspension system housable in a vehicle, comprising a plurality of suspensions, each of which extends in a main direction between a first end and a second end. The suspensions are arranged inclined so that the main directions converge at a common vertex.

The stated technical task and the specified objects are substantially achieved by a vehicle, comprising:
- a frame;
- a first box-like casing delimiting a compartment suitable for accommodating one or more people;
- at least a first suspension system according to what is described, said first suspension system being interposed between the first box-like casing and the frame.

In accordance with an embodiment, the common vertex of the first suspension system is situated at the box-like casing.

In accordance with an embodiment, the common vertex of the first suspension system is situated at the frame.

According to the invention, the frame comprises a counter-frame on which said first suspension system is mounted. The counter-frame represents further suspension means collaborating with the first suspension system.

According to the invention, the vehicle comprises a second box-like casing containing the first box-like casing and a second suspension system as described. The second suspension system is interposed between the first box-like casing and the second box-like casing so that the first box-like casing is hanging from said second box-like casing.

In accordance with an embodiment, the suspensions of the first suspension system are arranged to form a pyramidal structure.

In accordance with an embodiment, the first suspension system comprises as least four inclined suspensions.

In accordance with an embodiment, the first and the second suspension systems are respectively located on opposite sides of the first box-like casing.

### Brief description of the drawings

Further features and advantages of the present invention will become more apparent from the indicative and thus non-limiting description of non-claimed examples of a suspension system and a vehicle comprising such a suspension system, as illustrated in the attached drawings, in which:

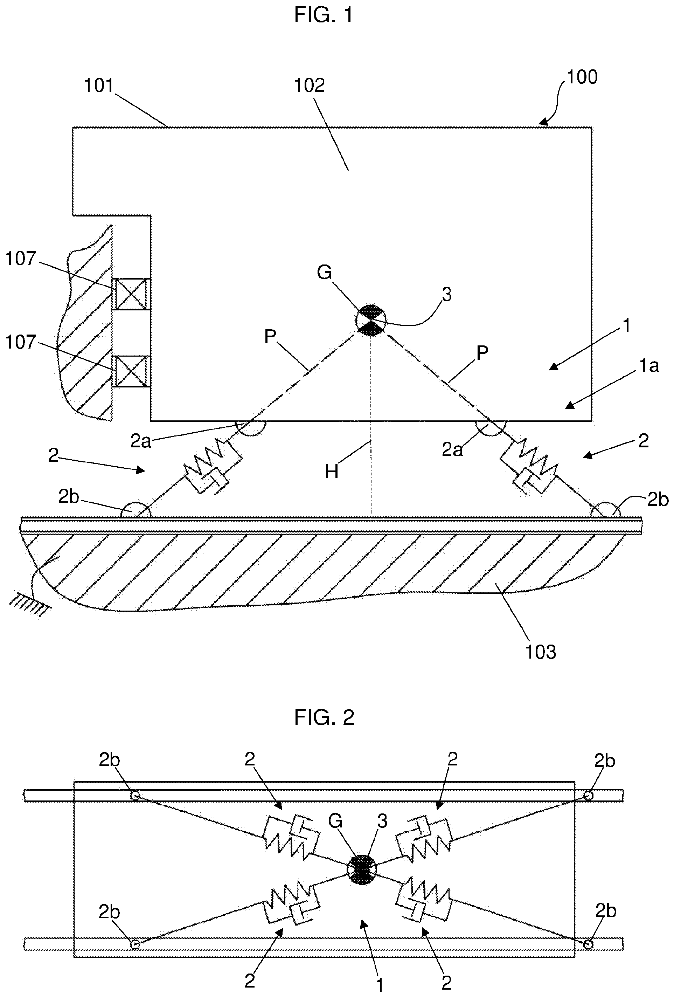

- figures 1, 3-6 illustrate different non-claimed examples of a vehicle comprising a suspension system in a front schematic view;
- figure 2 illustrates a top schematic view of a vehicle comprising a suspension system.

### Detailed description of non-claimed examples

With reference to the figures, number 1 indicates a suspension system housable in a vehicle 100.

The suspension system 1 comprises a plurality of suspensions 2. Each suspension 2 extends in a main direction between a first end 2a and a second end 2b.

In particular, in the example described and illustrated herein, the suspension 2 comprises at least one elastic component (diagrammed in the figures as a spring) and/or a damping component (diagrammed in the figures as a damper).

In an example, the suspension 2 comprises only an elastic component.

In an example, the suspension 2 comprises only a damping component.

The suspension 2 is of the known type and therefore will not be further described.

The suspensions 2 are arranged inclined so that the main directions are convergent at a common vertex 3.

As can be seen in the figures, tracing an extension P of the main direction of each suspension 2, these extensions P meet at a point, which is the common vertex 3.

Preferably, the common vertex 3 is located outside the space defined by the suspensions 2.

Preferably, the first end 2a is closer to the common vertex 3 with respect to the second end 2b. Preferably, the extension P of the main direction occurs from the first end 2a.

In particular, the suspensions 2 are arranged to form a pyramidal structure. Preferably, the suspensions 2 are arranged as corners of a pyramidal structure.

Pyramidal structure is intended herein as an arrangement of suspensions 2 forming an imaginary polyhedron having a polygon as a base and as faces the triangles having one side coinciding with one side of the base polygon and the opposite vertices coinciding (common vertex 3) in a point outside the plane of the base.

In this case, the imaginary base is the area to which the second ends 2b of the suspensions 2 are mounted.

Therefore, extension direction of the pyramid structure is intended herein as a direction which goes from the hypothetical base of the pyramid structure to the common vertex 3, indicated in the figures with the reference H.

In the preferred example, there are at least four inclined suspensions 2 to form the pyramidal structure.

Preferably, the suspension system 1 comprises additional suspensions 2' which integrate the pyramidal structure or collaborate therewith.

In accordance with an example, illustrated in the figures, the suspension system 1 comprises an additional suspension 2' arranged centrally vertically. Such an additional suspension 2' is thus located inside the pyramidal structure. In particular, its main direction is aligned and partially superimposed on the extension direction H of the pyramidal structure.

In accordance with an example, the suspension system 1 comprises one or more additional suspensions 2' arranged transversely to the pyramidal structure.

In both cases, the main direction of the additional suspension 2' converges at the common vertex 3.

A vehicle 100, subject-matter of the present invention, is described below.

The vehicle 100 comprises a first box-like casing 101. The first box-like casing 101 comprises a plurality of walls defining a compartment 102. The compartment 102 is suitable for accommodating one or more people.

In the example described and illustrated herein, the compartment 102 is the sanitary compartment of an ambulance. Such a compartment 102 is thus arranged in the rear part of the vehicle 100 and is preceded by a driver's cab.

In an alternative example, the compartment 102 is located in the front part of the vehicle 100 and houses the driver. In this case, the compartment 102 is the driver's cab.

Preferably, one or more buffers 107 are interposed between the driver's cab and the first box-like casing 101.

In an alternative example (not shown) the first box-like casing is a driver's cab of the vehicle 100 and the compartment 102 is the space therein.

The vehicle 100 comprises a frame 103. Frame is intended herein as a component of the vehicle 100 which has the task of resisting the loads in play and of possibly acting as a support for the other functional components.

The vehicle 100 comprises at least a first suspension system 1a interposed between the frame 103 and the first box-like casing 101. The first suspension system 1a is in accordance with what has been described above. In particular, the first suspension system 1a comprises suspensions 2 having main directions converging in a first common vertex 3a.

Preferably, a plurality of suspension systems 1a are interposed between the frame 103 and the first box-like casing 101.

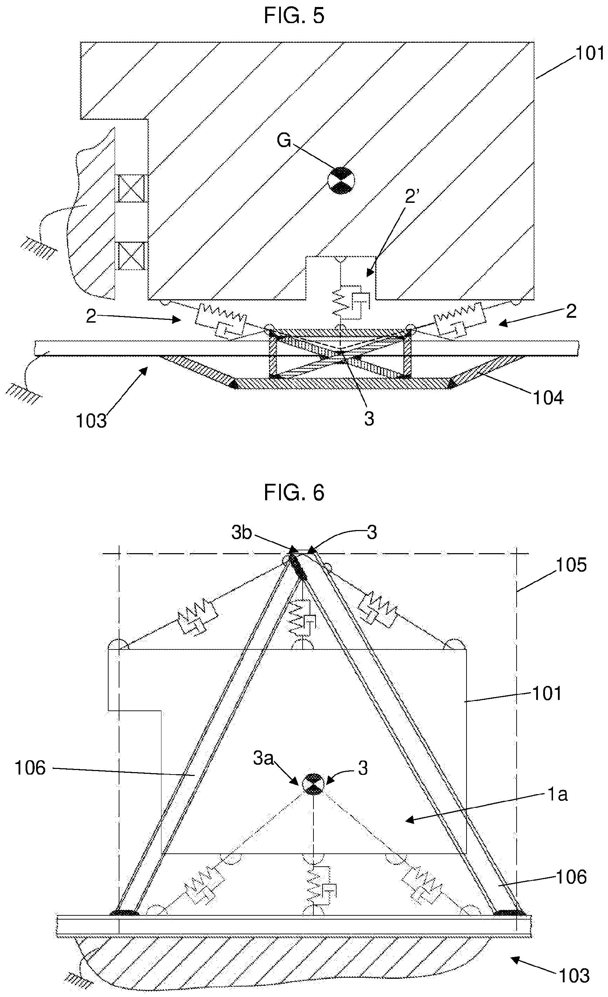

In the example of figure 5, the frame 103 comprises a counter-frame 104. The counter-frame is a known structure which allows to optimise the distribution of loads on the frame 103 of the vehicle 100.

By its nature, the counter-frame 104 represents further suspension means for the first box-like casing 101: the counter-frame 104 has torsional and flexural rigidity in space, suitably sized, and will influence the dynamic and cushioning behaviour of the vehicle 100. In this embodiment, therefore, there are different suspension systems in series: a vehicle suspension system (not modifiable), a further suspension system due to the presence of the counter-frame 104 with certain flexural-torsional rigidity and one or more pyramidal suspension systems 1.

Preferably, the portion of frame 103 (or counter-frame 104) involved by the first suspension system 1a is located below the first box-like casing 101.

In the figures, by way of non-exhaustive example, the first common vertex 3a is aligned with a barycentre G of the first box-like casing 101. In particular, the barycentre G and the common vertex 3a are aligned along the extension direction of the pyramidal structure of the first suspension system 1a (direction H).

In some figures, the barycentre G and the common vertex 3a are coincident. However, the relative position between barycentre G of the first box-like casing 101 and the common vertex 3a can be chosen as desired. The common vertex 3a can also not be placed on the vertical axis passing through the barycentre G.

In accordance with an example, the common vertex 3a of the first suspension system 1a is located at the first box-like casing 101. In this case, in an operating condition of the vehicle 100, the first suspension system 1a represents a straight pyramidal structure, i.e., a pyramid in which the vertex is above the base. Such an embodiment is hereinafter referred to with the expression "straight pyramid".

Preferably, in the event of a straight pyramid structure, the common vertex 3a and the barycentre G substantially coincide.

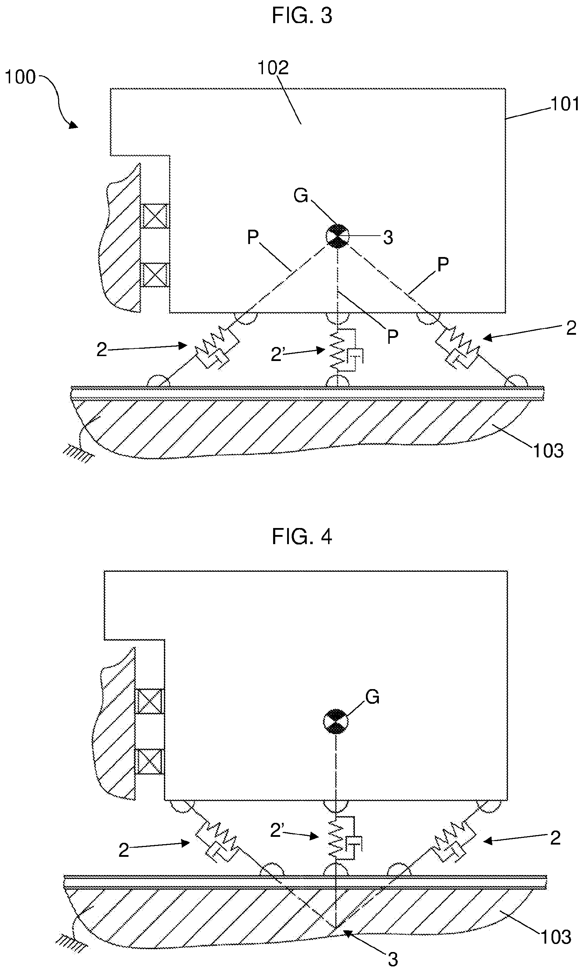

In accordance with an example, illustrated in figures 4 and 5, the common vertex 3a of the first suspension system 1a is located at the frame 103. In this case, in an operating condition of the vehicle 100, the first suspension system 1a represents an overturned pyramidal structure, i.e., a pyramid in which the vertex is below the base. Such an example is hereinafter referred to with the expression "overturned pyramid".

In accordance with an example, the first suspension system 1a has a pyramidal extension towards the first box-like casing 101, but the common vertex 3a is located outside it. That is, the first suspension system 1a is a straight pyramid, but with the vertex outside the first box-like casing 101.

In accordance with an example, illustrated in figure 6, the vehicle 100 comprises a second box-like casing 105. The second box-like casing 105 contains the first box-like casing 101. The second box-like casing 105 is mounted on the frame 103 (or on the counter-frame 104). For example, the second box-like casing 105 defines a counter-compartment.

In this case, the vehicle 100 comprises a second suspension system 1b interposed between the second box-like casing 105 and the first box-like casing 101. The second suspension system 1b is in accordance with what has been described above. In particular, the second suspension system 1b comprises suspensions 2 having main directions converging in a second common vertex 3b.

In particular, the first and the second suspension system 1a, 1b are respectively on opposite sides of the first box-like casing 101.

The first suspension system 1a is located on the lower side 101a of the first box-like casing 101. The second suspension system 1b is located on the upper side 101b of the first box-like casing 101.

The first suspension system 1a can thus be defined as the lower suspension system and the second suspension system 1b as the upper suspension system.

Thereby, as can be seen from figure 6, the first box-like casing 101 (and thus the compartment 102) is hanging and cushioned: below with respect to the frame 103 and above with respect to the second box-like casing 105.

The effect obtained by this embodiment is to make the first box-like casing 101 hanging, like a cradle or a hammock on a boat, hanging and appropriately cushioned.

Preferably, the second box-like casing 105 is stiffened by one or more inclined beams 106 which converge in the second common vertex 3b of the upper suspension system 1b.

In the example of figure 6, the first common vertex 3a of the first suspension system 1a is located at the first box-like casing 101. The second common vertex 3b of the second suspension system 1b is located at the second box-like casing 105.

That is, both suspension systems 1a, 1b are in a straight position.

It is possible to envisage examples variants in which one or both of the two suspension systems 1a, 1b are in the overturned pyramid position, as defined above.

What is described with reference to the mutual position between barycentre G and first common vertex 3a is also to be considered valid for the mutual position between barycentre G and second common vertex 3b, as well as for the mutual position between first and second common vertex 3a, 3b.

Preferably, the first suspension system 1a and the second suspension system 1b extend according to two substantially parallel, but not coincident, directions. Therefore, the first common vertex 3a and the second common vertex 3b are misaligned by a distance e.

In an alternative example, the first suspension system 1a and the second suspension system 1b extend according to a common direction, such that the first and the second common vertex 3a, 3b are aligned along such a common direction.

In this example, it is possible to identify the following different suspension systems in series:
- the vehicle suspension system (not modifiable);
- a first suspension system 1a, straight pyramid, according to the present invention;
- a suspension system due to the flexural-torsional rigidity of the frame of the second box-like casing 105;
- a second suspension system 1b, overturned pyramid, according to the present invention;

Possibly, a further suspension system can be introduced due to the presence of the counter-frame with given flexural-torsional rigidity.

In all the examples, the first box-like casing 101 is mounted in the vehicle 100 only by means of one or more suspension systems 1 as described above.

From the description provided, the features of the suspension system and of the vehicle comprising such a suspension system, according to the present invention are clear, as are the advantages.

In particular, the proposed suspension system increases the comfort of the patient transported and the equipment located around the patient. As a result of the new suspension system, the sanitary compartment will be affected in a reduced manner by any bumps in the ground and the sudden accelerations and decelerations typical of emergency transportation.

This also benefits in terms of preserving the medical equipment and devices present in the ambulance, as well as the medicines transported.

## Claims

1. A vehicle (100) comprising:
a frame (103);
a first box-like casing (101) delimiting a compartment (102) suitable for accommodating one or more people;
at least a first suspension system (1a) interposed between the first box-like casing (101) and the frame (103);
a second suspension system (1b);
each of said first and second suspension systems (1a, 1b) comprising a plurality of suspensions (2), each of which extends in a main direction between a first end (2a) and a second end (2b), said suspensions (2) being arranged inclined so that said main directions converge at a common vertex (3);
wherein the vehicle (100) comprises a second box-like casing (105) containing said first box-like casing (101) and the second suspension system (1b) is interposed between the first box-like casing (101) and the second box-like casing (105) so that the first box-like casing (101) is hanging from said second box-like casing (105),
**characterized in that** said frame (103) comprises a counter-frame (104) on which said first suspension system (1a) is mounted on a frame, said counter-frame (104) representing further suspension means collaborating with said first suspension system (1a).

2. The vehicle (100) according to claim 1, wherein the suspensions (2) of said first suspension system are arranged to form a pyramidal structure.

3. The vehicle (100) according to claim 1, wherein said first suspension system comprises at least four inclined suspensions (2).

4. The vehicle (100) according to claim 1, wherein the common vertex (3) of the first suspension system (1a) is located at the box-like casing (101).

5. The vehicle (100) according to claim 1, wherein the common vertex (3) of the first suspension system (1a) is located at the frame (103).

6. The vehicle (100) according to claim 1, wherein said first and second suspension systems (1a, 1b) are respectively located on opposite sides of the first box-like casing (101).

## Patentansprüche

1. Fahrzeug (100), umfassend:
einen Rahmen (103);
ein erstes kastenähnliches Gehäuse (101), das einen Raum (102) begrenzt, der zur Aufnahme einer oder mehrerer Personen geeignet ist;
mindestens ein erstes Aufhängungssystem (1a), das zwischen dem ersten kastenähnlichen Gehäuse (101) und dem Rahmen (103) angeordnet ist;
ein zweites Aufhängungssystem (1b);
wobei ein jedes der ersten und zweiten Aufhängungssysteme (1a, 1b) eine Vielzahl von Aufhängungen (2) umfasst, von denen sich eine jede in einer Hauptrichtung zwischen einem ersten Ende (2a) und einem zweiten Ende (2b) erstreckt, wobei die Aufhängungen (2) geneigt angeordnet sind, so dass die Hauptrichtungen an einem gemeinsamen Scheitel (3) zusammenlaufen;
wobei das Fahrzeug (100) ein zweites kastenähnliches Gehäuse (105) umfasst, das das erste kastenähnliche Gehäuse (101) enthält, und das zweite Aufhängungssystem (1b) zwischen dem ersten kastenähnlichen Gehäuse (101) und dem zweiten kastenähnlichen Gehäuse (105) angeordnet ist, so dass das erste kastenähnliche Gehäuse (101) an dem zweiten kastenähnlichen Gehäuse (105) hängt,
**dadurch gekennzeichnet, dass** der Rahmen (103) einen Gegenrahmen (104) umfasst, an dem das erste Aufhängungssystem (1a) an einem Rahmen angebracht ist, wobei der Gegenrahmen (104) eine weitere Aufhängungsvorrichtung darstellt, die mit dem ersten Aufhängungssystem (1a) zusammenwirkt.

2. Fahrzeug (100) nach Anspruch 1, wobei die Aufhängungen (2) des ersten Aufhängungssystems so angeordnet sind, dass sie eine pyramidenförmige Struktur bilden.

3. Fahrzeug (100) nach Anspruch 1, wobei das erste Aufhängungssystem mindestens vier geneigte Aufhängungen (2) umfasst.

4. Fahrzeug (100) nach Anspruch 1, wobei sich der gemeinsame Scheitel (3) des ersten Aufhängungssystems (1a) an dem kastenähnlichen Gehäuse (101) befindet.

5. Fahrzeug (100) nach Anspruch 1, wobei sich der gemeinsame Scheitel (3) des ersten Aufhängungssystems (1a) an dem Rahmen (103) befindet.

6. Fahrzeug (100) nach Anspruch 1, wobei sich das erste und das zweite Aufhängungssystem (1a, 1b) jeweils auf gegenüberliegenden Seiten des ersten kastenähnlichen Gehäuses (101) befinden.

## Revendications

1. Véhicule (100), comprenant:
un châssis (103);
un premier carter en forme de boîte (101) délimitant un compartiment (102) adapté pour accueillir une ou plusieurs personnes;
au moins un premier système de suspension (1a) interposé entre le premier carter en forme de boîte (101) et le châssis (103);
un second système de suspension (1b);
chacun desdits premier et second systèmes de suspension (1a, 1b) comprenant une pluralité de suspensions (2), dont chacune s'étend dans une direction principale entre une première extrémité (2a) et une seconde extrémité (2b), lesdites suspensions (2) étant agencées inclinées de sorte que lesdites directions principales convergent vers un sommet commun (3);
dans lequel le véhicule (100) comprend un second carter en forme de boîte (105) contenant ledit premier carter en forme de boîte (101) et le second système de suspension (1b) est interposé entre le premier carter en forme de boîte (101) et le second carter en forme de boîte (105) de sorte que le premier carter en forme de boîte (101) est suspendu audit second carter en forme de boîte (105),
**caractérisé en ce que** ledit châssis (103) comprend un contre-châssis (104) sur lequel ledit premier système de suspension (1a) est monté sur un châssis, ledit contre-châssis (104) représentant d'autres moyens de suspension collaborant avec ledit premier système de suspension (1a).

2. Véhicule (100) selon la revendication 1, dans lequel les suspensions (2) dudit premier système de suspension sont agencées pour former une structure pyramidale.

3. Véhicule (100) selon la revendication 1, dans lequel ledit premier système de suspension comprend au moins quatre suspensions inclinées (2).

4. Véhicule (100) selon la revendication 1, dans lequel le sommet commun (3) du premier système de suspension (1a) est situé au niveau du carter en forme de boîte (101).

5. Véhicule (100) selon la revendication 1, dans lequel le sommet commun (3) du premier système de suspension (1a) est situé au niveau du châssis (103).

6. Véhicule (100) selon la revendication 1, dans lequel lesdits premier et second systèmes de suspension (1a, 1b) sont respectivement situés sur des côtés opposés du premier carter en forme de boîte (101).
